# EUROPÄISCHE PATENTSCHRIFT

(11) **EP 3 375 034 B1**
(45) Veröffentlichungstag und Bekanntmachung des Hinweises auf die Patenterteilung: **09.10.2019**
(21) Anmeldenummer: 16804737.1
(22) Anmeldetag: 25.11.2016
(51) Int. Cl.: H01M 8/0612, H01M 8/04014, C01B 3/00, C01B 3/24

(54) **VERFAHREN ZUR ENERGIEERZEUGUNG SOWIE ENERGIEERZEUGUNGSVORRICHTUNG, INSBESONDERE FÜR MOBILE ANWENDUNGEN**
PROCESS AND SYSTEM FOR GENERATING ENERGY, IN PARTICULAR FOR MOBILE APPLICATIONS
PROCÉDÉ ET SYSTÈME DE GÉNERATION D'ÉNERGIE PARTICULIÈREMENT POUR DES APPLICATIONS MOBILES

(30) Priorität: 16.12.2015 DE 102015225394
(43) Veröffentlichungstag der Anmeldung: 19.09.2018
(73) Patentinhaber: Siemens Aktiengesellschaft, 80333 München (DE)
(72) Erfinder: HOFFMANN, Joachim, 90559 Burgthann (DE)
(86) Internationale Anmeldenummer: PCT/EP2016/078791
(87) Internationale Veröffentlichungsnummer: WO 2017/102285

(56) Entgegenhaltungen:
- DE-A1-102010 042 678
- DE-A1-102012 216 669
- JP-A- 2004 256 336
- US-A1- 2007 231 632

## Beschreibung

Die Erfindung betrifft ein Verfahren zur Energieerzeugung gemäß Oberbegriff des Patentanspruchs 1 sowie eine Energieerzeugungsvorrichtung gemäß Oberbegriff des Patentanspruchs 7. Ein derartiges Verfahren bzw. eine derartige Energieerzeugungsvorrichtung sind beispielsweise aus der US 2007/0231632 A1 bekannt.

In einer Brennstoffzelle wird durch die elektrochemische Verbindung von Wasserstoff (H₂) und Sauerstoff (O₂) an einer Elektrode zu Wasser (H₂O) elektrischer Strom mit hohem Wirkungsgrad erzeugt.

Insbesondere in mobilen Anwendungen muss der für den Betrieb von Brennstoffzellen benötigte Wasserstoff gespeichert werden. Diese Speicherung kann in unterschiedlicher Form erfolgen, z.B. als komprimiertes Gas, in flüssiger Form, mittels Metallhydriden (z.B. Aluminium, Magnesium) oder in Form hydrierter flüssiger organischer Verbindungen.

In letzterem Fall werden flüssige organische Verbindungen als Wasserstoffträger verwendet. Als Wasserstoffträger kommen vorzugsweise aromatische Verbindungen, insbesondere kondensierte polyzyklische Kohlenwasserstoffe, zum Einsatz. Zur Hydrierung wird Wasserstoff in einer chemischen, katalysierten Reaktion in den Wasserstoffträger eingebaut (hydriert). Dieser eingebaute Wasserstoff kann dann in einer chemischen, katalysierten Rückreaktion wieder freigesetzt und die aromatische Verbindung zurückgewonnen werden. Sowohl die energiereiche hydrierte Form als auch die energiearme dehydrierte Form des Wasserstoffträgers werden im Folgenden als "flüssiger organischer Wasserstoffträger" (engl. Liquid Organic Hydrogen Carrier (LOHC)) bezeichnet.

Diese Art der Wasserstoffspeicherung hat den Vorteil, dass sie mit hoher Energiedichte, weitestgehend drucklos und in Form einer schwer entflammbaren Flüssigkeit erfolgen kann, was sie gerade für mobile Anwendungen, wie z.B. an Bord von Unterwasserfahrzeugen, geeignet macht.

Bei einem Unterwasserfahrzeug kann der hydrierte flüssige organische Wasserstoffträger durch eine Betankung von außen, z.B. in einem Hafen, an Bord gebracht werden. Der hydrierte flüssige organische Wasserstoffträger kann aber auch an Bord des Unterwasserfahrzeuges durch Hydrierung des Wasserstoffträgers erzeugt werden. Der für die Hydrierung benötigte Wasserstoff kann dann beispielsweise durch einen Elektrolyseur erzeugt werden (siehe z.B. WO 2012/097925 A1).

So sind beispielsweise aus der WO 2014/044706 A1 eine Anordnung und ein Verfahren für die Energieversorgung von Fahrzeugen bekannt, bei der kondensierte polyzyklische Kohlenwasserstoffe als Wasserstoffträger verwendet werden. Diese verfügen über ein ausgedehntes n-konjugiertes Elektronensystem und unterliegen bei moderaten Temperaturen in Gegenwart eines geeigneten Katalysators einer Hydrierungsreaktion. Dabei wird Wasserstoff unter Sättigung der ungesättigten Doppelbindungen in die Substanz eingebaut (hydriert). Der mittels Hydrierung eingebaute Wasserstoff kann im Folgenden in einer Rückreaktion lediglich durch Temperaturerhöhung und/oder Reduzierung des Wasserstoffdrucks wieder aus dem hydrierten Produkt unter Regenerierung der aromatischen Substanz gewonnen werden.

Bevorzugt ist dabei der Wasserstoffträger ausgewählt aus einer Gruppe enthaltend polyzyklische aromatische Kohlenwasserstoffe, polyzyklische heteroaromatische Kohlenwasserstoffe, n-konjugierte organische Polymere oder einer Kombination davon.

In einer besonders bevorzugten Ausführungsform wird als energiearmes Substrat geeignet zur Speicherung von Wasserstoff N-Ethylcarbazol, N-n-Propylcarbazol oder N-iso-propylcarbazol verwendet.

Weiterhin ist es gemäß der WO 2014/044706 A1 ebenfalls vorstellbar, nicht-heteroaromatische Kohlenwasserstoffe zu verwenden. So ist bekannt, dass mit mindestens zwei Benzylresten substituiertes Toluol, wie z.B. Dibenzyltoluol, als flüssiger Wasserstoffspeicher dienen kann. Die Benzylreste können substituiert oder unsubstituiert vorliegen (die oben genannten Gruppen können als Substituent auftreten). Ebenfalls kann die Anordnung der Benzylreste am Toluolring beliebig variieren. Besonders bevorzugt ist die Verwendung von Dibenzyltoluol (auch unter dem Handelsnamen Marlotherm SH bekannt).

Die in der WO 2014/044706 A1 offenbarte Energieerzeugungsvorrichtung umfasst zur Erzeugung bzw. Freisetzung des Wasserstoffes eine Dehydrierbaugruppe mit einem chemischen Reaktor und einer Brennstoffzelle. In dem chemischen Reaktor wird Wasserstoff durch zumindest teilweise Dehydrierung des flüssigen organischen Wasserstoffträgers erzeugt und aus dem erzeugten Wasserstoff und aus Sauerstoff wird in der Brennstoffzelle elektrischer Strom und Wasser erzeugt. Aus zumindest einem Teil des erzeugten Wasserstoffs wird in einer Heizeinrichtung (z.B. einem katalytischen Brenner) zudem Wärme für den chemischen Reaktor erzeugt.

Aus der DE 10 2008 034 221 A1 ist ein automotiv anwendbares LOHC-System mit einer Brennstoffzelle, einem Reaktor zur Erzeugung von H2 und einer von der Brennstoffzelle zu dem Reaktor geführten Abwärmeleitung bekannt.

Die US 2007/0231632 A1 wird als nächstliegender Stand der Technik betrachtet und offenbart ein Brennstoffzellensystem mit einer Brennstoffzelle, die mit Wasserstoff betrieben wird, der in einem katalytischen Reaktor durch Dehydrierung eines flüssigen Wasserstoffträgers erzeugt wird. Anodenseitiges Abgas der Brennstoffzelle wird mit kathodenseitigem Abgas der Brennstoffzelle gemischt und in einem katalytischen Verbrenner verbrannt. Die kleine Restmenge an Wasserstoff in dem anodenseitigen Abgas reagiert dabei mit Sauerstoff in dem kathodenseitigen Abgas und erzeugt Wärme. Das durch diese Verbrennung erzeugte Abgas wird zur Erhöhung der Temperatur des flüssigen Wasserstoffträgers und des Katalysators im Reaktor zur Freisetzung von Wasserstoff aus der Flüssigkeit genutzt.

Zum weiteren Stand der Technik wird auf die DE 10 2012 216669 A1, die DE 10 2010 042678 A1, die JP 2004 256336 A, die DE 199 47 339 A1, die DE 10 2014 006 430 A1 sowie die DE 10 2012 216 669 A1 verwiesen.

Ausgehend hiervon ist es Aufgabe vorliegender Erfindung, bei einem derartigen Verfahren zur Energieerzeugung bzw. einer derartigen Energieerzeugungsvorrichtung einen höheren Wirkungsgrad bei der Erzeugung des elektrischen Stromes zu erzielen.

Die Lösung der auf das Verfahren gerichteten Aufgabe gelingt durch ein Verfahren gemäß Patentanspruch 1 und die Lösung der auf die Energieerzeugungsvorrichtung gerichteten Aufgabe gelingt durch eine Energieerzeugungsvorrichtung gemäß Patentanspruch 7. Ein Wasserfahrzeug mit einer derartigen Energieerzeugungsvorrichtung ist Gegenstand des Anspruchs 13. Vorteilhafte Ausgestaltungen sind jeweils Gegenstand der Unteransprüche.

Bei dem erfindungsgemäßen Verfahren wird der von dem chemischen Reaktor erzeugte Wasserstoff zuerst durch die mindestens eine Brennstoffzelle geführt und nach der Brennstoffzelle verbleibender Anteil des Wasserstoffs anschließend der Heizeinrichtung zugeführt. Der erzeugte Wasserstoff wird somit nicht direkt nach dem Reaktor abgezweigt und der Heizeinrichtung zugeführt, sondern über den "Umweg" der mindestens einen Brennstoffzelle. Der Reaktor, die mindestens eine Brennstoffzelle und die Heizeinrichtung für den Reaktor sind somit hinsichtlich des Wasserstoffstroms in Reihe geschaltet. Der erzeugte Wasserstoff wird damit vollständig durch die mindestens eine Brennstoffzelle geleitet. Die mindestens eine Brennstoffzelle kann damit in Teillast betrieben werden, d.h. mit stöchiometrischem Wasserstoffüberschuss, was zu einem Betrieb mit besserem Wirkungsgrad und einer höheren elektrischen Leistung führt als im Fall, dass der Wasserstoff für die Heizeinrichtung vorher abgezweigt wird und somit die mindestens eine Brennstoffzelle mit nur geringem oder überhaupt keinem stöchiometrischem Wasserstoffüberschuss betrieben wird.

Der Sauerstoff kann im Rahmen der Erfindung dabei in (technisch) reiner Form oder auch als Bestandteil eines Gasgemisches (wie z.B. im Fall von Luft) vorliegen, d.h. die mindestens eine Brennstoffzelle kann im Rahmen der Erfindung mit (technisch) reinem Sauerstoff oder auch mit sauerstoffhaltigen Gasgemischen betrieben werden.

Erfindungsgemäß wird ein der mindestens einen Brennstoffzelle zugeführter Volumenstrom aus dem von dem Reaktor erzeugten Wasserstoff in Abhängigkeit von einer von der mindestens einen Brennstoffzelle zu erzeugenden elektrischen Ausgangsleistung und einem für die Heizeinrichtung benötigten Volumenstrom an Wasserstoff gesteuert und/oder geregelt. Dies kann beispielsweise anhand einer oder mehrerer in einer Steuer- und/oder Regelungseinrichtung abgespeicherter Funktionen, Wertetabellen und/oder Messwerte erfolgen, die den für die mindestens eine Brennstoffzelle und den für die Heizeinrichtung benötigten Volumenstrom an Wasserstoff (und somit den in der Summe der mindestens einen Brennstoffzelle zuzuführenden Volumenstrom an Wasserstoff) in Abhängigkeit von der zu erzeugenden elektrischen Ausgangsleistung beschreiben.

Alternativ kann erfindungsgemäß zur Steuerung und/oder Regelung der Zufuhr an von dem Reaktor erzeugten Wasserstoff zu der mindestens einen Brennstoffzelle ein Druck des Wasserstoffs nach der Führung durch die mindestens eine Brennstoffzelle (d.h. am Ausgang der mindestens einen Brennstoffzelle) oder einer Temperatur der mindestens einen Brennstoffzelle in Abhängigkeit von einer von der mindestens einen Brennstoffzelle zu erzeugenden elektrischen Leistung und einem für die Heizeinrichtung benötigten Volumenstrom an von dem Reaktor erzeugten Wasserstoff gesteuert und/oder geregelt werden.

Die Steuerung und/oder Regelung kann dabei anstatt in Abhängigkeit von dem auf den für die Heizeinrichtung benötigten Volumenstrom an Wasserstoff auch in Abhängigkeit von der Temperatur der Heizeinrichtung erfolgen.

Gemäß einer besonders vorteilhaften Ausgestaltung umfasst der Reaktor mehrere unabhängig voneinander betreibbare Teilreaktoren und eine Verteilung des dem Reaktor zugeführten hydrierten flüssigen organischen Wasserstoffträgers auf die einzelnen Teilreaktoren wird in Abhängigkeit von einer von der mindestens einen Brennstoffzelle zu erzeugenden elektrischen Leistung gesteuert und/oder geregelt. Durch Steuerung und/oder Regelung der Anzahl der betriebenen Teilreaktoren können die jeweils betriebenen Reaktoren beispielsweise gezielt in einen Betriebspunkt gebracht werden, in dem eine Nutzung der von der Heizeinrichtung erzeugten Wärme mit maximalem Wirkungsgrad erfolgt.

Eine noch weitere Optimierung des Wirkungsgrads durch eine noch bessere Wärmeausnutzung der Heizeinrichtung ist möglich, wenn die Heizeinrichtung mehrere unabhängig voneinander betreibbare Teilheizeinrichtungen umfasst, wobei jede der Teilheizeinrichtungen jeweils genau einem der Teilreaktoren zugeordnet ist, und wobei eine Verteilung des der Heizeinrichtung zugeführten Wasserstoffs auf die einzelnen Teilheizeinrichtungen in Abhängigkeit von einer von der mindestens einen Brennstoffzelle zu erzeugenden elektrischen Leistung gesteuert und/oder geregelt wird. Durch Steuerung und/oder Regelung der Verteilung des Wasserstoffs auf die einzelnen Teilheizeinrichtungen kann die Heizeinrichtung beispielsweise gezielt in einen Betriebspunkt gebracht werden, in dem eine Nutzung der von der Heizeinrichtung erzeugten Wärme in dem Reaktor mit maximalem Wirkungsgrad erfolgt.

Bevorzugt werden sowohl die Verteilung des der Heizeinrichtung zugeführten Wasserstoffs auf die einzelnen Teilheizeinrichtungen als auch die Verteilung des dem Reaktor zugeführten hydrierten flüssigen organischen Wasserstoffträgers auf die einzelnen Teilreaktoren derart gesteuert und/oder geregelt, dass der Reaktor in einem Betriebspunkt betrieben wird, in dem der Verbrauch an hydriertem flüssigen organischen Wasserstoffträger minimiert ist.

Je nach geforderter elektrischer Brennstoffzellenleistung bzw. dazu erzeugter Wasserstoffmenge kann dann, z.B. über Ventile, zum einen der Zufluss an hydriertem flüssigen organischen Wasserstoffträger auf die einzelnen Teilreaktoren und die Verteilung des verfügbaren Wasserstoffs auf die einzelnen Teilheizungen und somit die Wärmezufuhr zu den Teilreaktoren gesteuert und/oder geregelt werden. D.h. bei einer geringeren geforderten elektrischen Brennstoffzellenleistung werden eine geringere Anzahl von Teilreaktoren mit hydriertem flüssigen organischen Wasserstoffträger und eine geringere Anzahl von Teilheizungen mit Wasserstoff versorgt bzw. jeweils eine höhere Anzahl bei einer höheren geforderten elektrischen Brennstoffzellenleistung. Bei Nennlast der Brennstoffzelle sind dann alle Teilreaktoren und alle Teilheizungen in Betrieb und werden entsprechend mit hydriertem flüssigen organischen Wasserstoffträger bzw. Wasserstoff versorgt.

Gemäß einer weiteren vorteilhaften Ausgestaltung wird der von dem chemischen Reaktor erzeugte Wasserstoff vor einer Zufuhr zu der mindestens einen Brennstoffzelle durch eine Gasreinigungsvorrichtung geleitet, in der von dem erzeugten Wasserstoff mitgerissener flüssiger organischer Wasserstoffträger entfernt wird.

Eine erfindungsgemäße Energieerzeugungsvorrichtung, insbesondere für mobile Anwendungen, umfasst
- einen chemischen Reaktor zur Erzeugung von Wasserstoff durch zumindest teilweise Dehydrierung eines hydrierten flüssigen organischen Wasserstoffträgers,
- mindestens eine mit dem chemischen Reaktor in Verbindung stehende Brennstoffzelle zur Erzeugung von elektrischem Strom und Wasser aus durch den Reaktor erzeugtem Wasserstoff und aus Sauerstoff,
- eine mit dem chemischen Reaktor in Verbindung stehende Heizeinrichtung zur Erzeugung von Wärme für den chemischen Reaktor aus durch den Reaktor erzeugtem Wasserstoff,
   wobei
- der Reaktor, die Brennstoffzelle und die Heizeinrichtung hinsichtlich des Wasserstoffstroms in Reihe geschaltet sind derart, dass der von dem chemischen Reaktor erzeugte Wasserstoff zuerst durch die mindestens eine Brennstoffzelle geführt und anschließend der Heizeinrichtung (8) zugeführt wird.

Erfindungsgemäß umfasst die Energieerzeugungsvorrichtung eine Steuer- und/oder Regelungseinrichtung, die ausgebildet ist zur Steuerung und/oder Regelung eines der mindestens einen Brennstoffzelle zugeführten Volumenstromes an Wasserstoff in Abhängigkeit von einer von der mindestens einen Brennstoffzelle zu erzeugenden elektrischen Leistung und einem für die Heizeinrichtung benötigten Volumenstrom an Wasserstoff. Dies kann beispielsweise anhand einer oder mehrerer in einer Steuer- und/oder Regelungseinrichtung abgespeicherter Funktionen, Wertetabellen und/oder Messwerte erfolgen, die den für die mindestens eine Brennstoffzelle und den für die Heizeinrichtung benötigten Volumenstrom an Wasserstoff (und somit den in der Summe der mindestens einen Brennstoffzelle zuzuführenden Volumenstrom an Wasserstoff) in Abhängigkeit von der zu erzeugenden elektrischen Ausgangsleistung beschreiben.

Alternativ kann erfindungsgemäß die Energieerzeugungsvorrichtung eine Steuer- und/oder Regelungseinrichtung umfassen, die ausgebildet ist zur Steuerung und/oder Regelung einer Zufuhr an von dem Reaktor erzeugten Wasserstoff zu der mindestens einen Brennstoffzelle durch Steuerung und/oder Regelung eines Drucks des Wasserstoffs nach der Führung durch die mindestens eine Brennstoffzelle (d.h. am Ausgang der mindestens einen Brennstoffzelle) oder durch Steuerung und/oder Regelung einer Temperatur der mindestens einen Brennstoffzelle in Abhängigkeit von einer von der mindestens einen Brennstoffzelle zu erzeugenden elektrischen Leistung und einem für die Heizeinrichtung benötigten Volumenstrom an von dem Reaktor erzeugten Wasserstoff.

Die Steuerung und/oder Regelung kann dabei anstatt in Abhängigkeit von dem auf den für die Heizeinrichtung benötigten Volumenstrom an Wasserstoff auch in Abhängigkeit von der Temperatur der Heizeinrichtung erfolgen.

Bevorzugt umfasst der Reaktor mehrere unabhängig voneinander betreibbare Teilreaktoren und die Steuer- und/oder Regelungseinrichtung ist ausgebildet, eine Verteilung des dem Reaktor zugeführten hydrierten flüssigen organischen Wasserstoffträgers auf die einzelnen Teilreaktoren in Abhängigkeit von einer von der mindestens einen Brennstoffzelle zu erzeugenden elektrischen Leistung zu steuern und/oder zu regeln. Die Steuerung und/oder Regelung der Verteilung erfolgt beispielsweise derart, dass der Reaktor in einem Betriebspunkt betrieben wird, in dem eine Nutzung der von der Heizeinrichtung erzeugten Wärme mit maximalem Wirkungsgrad erfolgt.

Gemäß einer weiteren vorteilhaften Ausgestaltung umfasst die Heizeinrichtung mehrere unabhängig voneinander betreibbare Teilheizeinrichtungen, wobei jede der Teilheizeinrichtungen jeweils genau einem der Teilreaktoren zugeordnet ist, und wobei die Steuer- und/oder Regelungseinrichtung ausgebildet ist, die Verteilung des der Heizeinrichtung zugeführten Wasserstoffs auf die einzelnen Teilheizeinrichtungen in Abhängigkeit von einer von der mindestens einen Brennstoffzelle zu erzeugenden elektrischen Leistung zu steuer und/oder zu regeln.

Gemäß einer besonders vorteilhaften Ausgestaltung ist die Steuer- und/oder Regelungseinrichtung ausgebildet, die Verteilung des der Heizeinrichtung zugeführten Wasserstoffs auf die einzelnen Teilheizeinrichtungen und die Verteilung des dem Reaktor zugeführten hydrierten flüssigen organischen Wasserstoffträgers auf die einzelnen Teilreaktoren derart zu steuern und/oder zu regeln, dass der Reaktor in einem Betriebspunkt betrieben wird, in dem der Verbrauch an hydriertem flüssigen organischen Wasserstoffträger minimiert ist.

Vorzugsweise ist in der Verbindung zwischen dem chemischen Reaktor und der mindestens einen Brennstoffzelle eine Gasreinigungsvorrichtung zur Entfernung von flüssigem organischem Wasserstoffträger angeordnet.

Die für das erfindungsgemäße Verfahren und seine vorteilhaften Ausgestaltungen genannten Vorteile gelten entsprechend für die erfindungsgemäße Vorrichtung und deren jeweils korrespondierenden vorteilhaften Ausgestaltungen.

Eine besonders vorteilhafte Verwendung der Erfindung liegt im Bereich der Mobilität, insbesondere bei Wasserfahrzeugen, und hier insbesondere bei Wasserfahrzeugen mit außenluftunabhängigen Antrieben wie z.B. Unterwasserfahrzeugen (z.B. Unterseeboote, Tauchroboter, USVs).

Ein erfindungsgemäßes Wasserfahrzeug, insbesondere Unterwasserfahrzeug, umfasst deshalb eine vorstehend erläuterte Energieerzeugungsvorrichtung.

Gemäß einer vorteilhaften Ausgestaltung weist das Wasserfahrzeug einen Speicher für den hydrierten flüssigen organischen Wasserstoffträger und einen von dem elektrischen Strom der mindestens einen Brennstoffzelle gespeisten elektrischen Antriebsmotor für den Antrieb des Wasserfahrzeuges auf.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1: eine erste Ausführungsform einer erfindungsgemäßen Energieerzeugungsvorrichtung,
- FIG 2: eine zweite Ausführungsform einer erfindungsgemäßen Energieerzeugungsvorrichtung,
- FIG 3: eine Verwendung der Energieerzeugungsvorrichtung von FIG 1 oder 2 in einem Unterwasserfahrzeug.

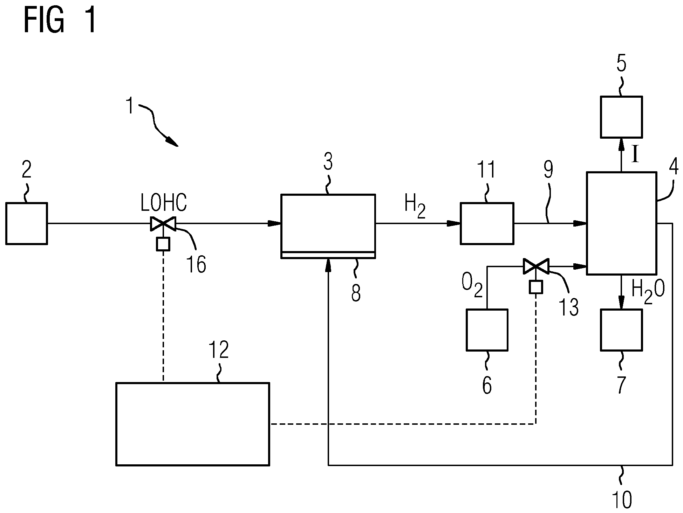

Eine in FIG 1 gezeigte erfindungsgemäße Energieerzeugungsvorrichtung 1 umfasst einen Speicher 2 für einen hydrierten flüssigen organischen Wasserstoffträger (LOHC = Liquid Organic Hydrogen Carrier), einen chemischen Reaktor 3 zur Erzeugung von Wasserstoff durch zumindest teilweise Dehydrierung des hydrierten flüssigen organischen Wasserstoffträgers und mindestens eine mit dem chemischen Reaktor 3 in Verbindung stehende Brennstoffzelle 4 zur Erzeugung von elektrischem Strom I für eine elektrische Last 5 und von Wasser H2O aus dem erzeugten Wasserstoff H2 und aus Sauerstoff O2. Der Sauerstoff O2 stammt hier aus einem Speicher 6, kann aber auch unter Verzicht auf den Speicher 6 der Umgebungsluft entnommen sein. Das erzeugte Wasser H2O wird in einem Speicher 7 gesammelt. Eine mit dem chemischen Reaktor 3 in thermischer Verbindung stehende Heizeinrichtung 8 dient zur Erzeugung von Wärme für den chemischen Reaktor 3 aus dem in der Brennstoffzelle 4 unverbrauchten Anteil des erzeugten Wasserstoffs H2. Bei der Heizeinrichtung handelt es sich beispielsweise um einen katalytischen Brenner, der durch Verbrennung von Wasserstoff Wärme für den Reaktor 3 erzeugt.

Zur Zufuhr des erzeugten Wasserstoffs H2 zu der Heizeinrichtung 8 ist diese über die mindestens eine Brennstoffzelle 4 mit dem chemischen Reaktor 3 verbunden. Die Brennstoffzelle 4 ist hierzu über eine Verbindungsleitung 9 mit dem Reaktor 3 und die Heizeinrichtung 8 über eine Verbindungsleitung 10 mit der Brennstoffzelle 4 verbunden. Der Reaktor 3, die Brennstoffzelle 4 und die Heizeinrichtung 8 sind somit hinsichtlich des Wasserstoffstroms in Reihe geschaltet derart, dass der von dem chemischen Reaktor 3 erzeugte Wasserstoff H2 zuerst durch die mindestens eine Brennstoffzelle 4 geführt und anschließend der Heizeinrichtung 8 zugeführt wird.

In die Verbindungsleitung 9 zwischen dem chemischen Reaktor 3 und der mindestens einen Brennstoffzelle 4 ist eine Gasreinigungsvorrichtung 11 zur Entfernung von flüssigem organischem Wasserstoffträger (LOHC) angeordnet.

Eine Steuer- und/oder Regelungseinrichtung 12 ist ausgebildet zur Steuerung und/oder Regelung eines der mindestens einen Brennstoffzelle 4 zugeführten Volumenstromes an von dem Reaktor 3 erzeugten Wasserstoff H2 in Abhängigkeit von einer von der mindestens einen Brennstoffzelle 4 zu erzeugenden elektrischen Leistung und einem für die Heizeinrichtung 8 benötigtem Volumenstrom an von dem Reaktor 3 erzeugten Wasserstoff H2. Dies kann beispielsweise anhand einer oder mehrerer in der Steuer- und/oder Regelungseinrichtung 12 abgespeicherter Funktionen, Wertetabellen und/oder Messwerte erfolgen, die den für die mindestens eine Brennstoffzelle 4 und den für die Heizeinrichtung 8 benötigten Volumenstrom an Wasserstoff (und somit den in der Summe der mindestens einen Brennstoffzelle 4 zuzuführenden Volumenstrom an Wasserstoff) in Abhängigkeit von der zu erzeugenden elektrischen Ausgangsleistung beschreiben.

Alternativ kann die Steuer- und/oder Regelungseinrichtung auch ausgebildet sein zur Steuerung und/oder Regelung einer Zufuhr an von dem Reaktor 3 erzeugten Wasserstoff H2 zu der mindestens einen Brennstoffzelle 4 durch Steuerung und/oder Regelung eines Drucks des Wasserstoffs H2 nach der Führung durch die mindestens eine Brennstoffzelle 4 (d.h. am Ausgang der mindestens einen Brennstoffzelle 4) oder durch Steuerung und/oder Regelung einer Temperatur der mindestens einen Brennstoffzelle 4 in Abhängigkeit von einer von der mindestens einen Brennstoffzelle 4 zu erzeugenden elektrischen Leistung und einem für die Heizeinrichtung 8 benötigten Volumenstrom an von dem Reaktor 3 erzeugten Wasserstoff.

Die Steuerung und/oder Regelung kann dabei anstatt in Abhängigkeit von dem auf den für die Heizeinrichtung 8 benötigten Volumenstrom an Wasserstoff auch in Abhängigkeit von der Temperatur der Heizeinrichtung 8 erfolgen.

Die Steuer- und/oder Regelungseinrichtung 12 steuert und/oder regelt hierzu über ein Ventil 13 die Zufuhr an Sauerstoff O2 zu der Brennstoffzelle 4 und somit den Verbrauch an Wasserstoff H2 in der Brennstoffzelle 4, und über ein Ventil 16 die Zufuhr an hydriertem flüssigen organischen Wasserstoffträger LOHC zu dem Reaktor 3. Weiterhin kann die Steuer- und/oder Regelungseinrichtung 12 in nicht näher dargestellter Weise auch die Zufuhr von Sauerstoff O2 oder sauerstoffhaltigem Abgas der mindestens einen Brennstoffzelle 4 zu der Heizeinrichtung 8 steuern und/oder regeln.

Beim Betrieb der Energieerzeugungsvorrichtung 1 wird dann in dem chemischen Reaktor 3 Wasserstoff durch zumindest teilweise Dehydrierung des hydrierten flüssigen organischen Wasserstoffträgers erzeugt. Dieser erzeugte bzw. freigesetzte Wasserstoff wird in der Gasreinigung 11 von mitgerissenen flüssigen organischen Verbindungen befreit und dann der mindestens einer Brennstoffzelle 4 zugeführt, in der elektrischer Strom I und Wasser H2O aus dem erzeugten und zugeführten Wasserstoff H2 und aus dem zugeführten Sauerstoff O2 erzeugt wird. Der nicht in der Brennstoffzelle 4 verbrauchte Wasserstoff H2 wird der Heizeinrichtung 8 zugeführt und daraus Wärme für den chemischen Reaktor 3 erzeugt.

Der erzeugte Wasserstoff H2 wird somit nicht direkt nach dem Reaktor 3 abgezweigt und der Heizeinrichtung 8 zugeführt, sondern über den "Umweg" der mindestens einen Brennstoffzelle 4. Der erzeugte Wasserstoff H2 wird damit vollständig durch die mindestens eine Brennstoffzelle 4 geleitet, wodurch diese in Teillast betrieben werden kann, d.h. mit stöchiometrischem Wasserstoffüberschuss, was zu einem Betrieb mit besserem Wirkungsgrad der mindestens einen Brennstoffzelle 4 und einer höheren elektrischen Leistung führt als im Fall, dass der Wasserstoff H2 für die Heizeinrichtung 8 vor der Brennstoffzelle 4 abgezweigt wird und somit die mindestens eine Brennstoffzelle 4 mit nur geringem oder überhaupt keinem stöchiometrischem Wasserstoffüberschuss betrieben wird.

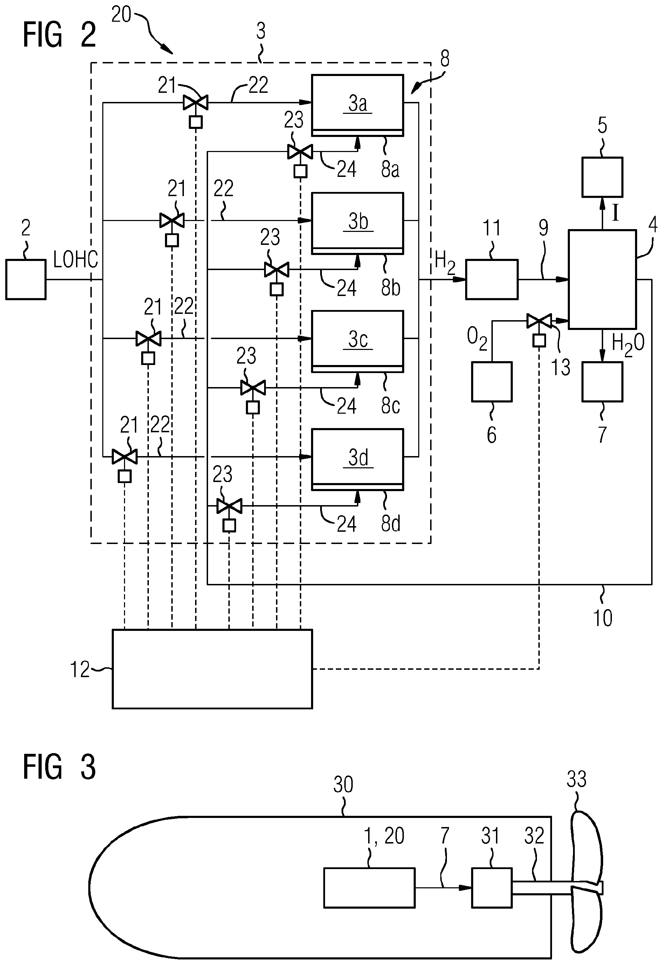

Bei einer in FIG 2 gezeigten zweiten Ausführungsform einer erfindungsgemäßen Energieerzeugungsvorrichtung 20 umfasst der Reaktor 3 mehrere jeweils unabhängig voneinander betreibbare Teilreaktoren 3a, 3b, 3c, 3d und die Heizeinrichtung 8 umfasst mehrere jeweils unabhängig voneinander betreibbare Teilheizeinrichtungen 8a, 8b, 8c, 8d, wobei jede der Teilheizeinrichtungen 8a, 8b, 8c, 8d jeweils genau einem der Teilreaktoren 3a, 3b, 3c, 3d zugeordnet ist.

Die Teilreaktoren 3a, 3b, 3c, 3d sind hierzu eingangsseitig über jeweils eine gesonderte und mit einem steuerbaren Ventil 21 versehene Leitung 22 mit dem Speicher 2 verbunden. Jedes der Ventile 21 ist von der Steuer- und/oder Regelungseinrichtung 12 individuell steuerbar. Für jeden der Teilreaktoren 3a, 3b, 3c, 3d kann somit individuell die Zufuhr von hydriertem flüssigem Wasserstoffträger zu- oder abgeschaltet werden.

In vergleichbarer Weise sind die Teilheizeinrichtungen 8a, 8b, 8c, 8d eingangsseitig über jeweils eine gesonderte und mit einem steuerbaren Ventil 23 versehene Leitung 24 mit der Verbindungsleitung 10 verbunden. Jedes der Ventile 23 ist von der Steuer- und/oder Regelungseinrichtung 12 individuell steuerbar. Für jede der Teilheizungseinrichtungen 8a, 8b, 8c, 8d kann somit individuell die Zufuhr von Wasserstoff H2 zu- oder abgeschaltet werden.

Eine Verteilung des dem Reaktor 3 zugeführten hydrierten flüssigen organischen Wasserstoffträgers auf die einzelnen Teilreaktoren 3a, 3b, 3c, 3d kann dann in Abhängigkeit von einer von der mindestens einen Brennstoffzelle 4 zu erzeugenden elektrischen Leistung gesteuert und/oder geregelt werden. Beispielsweise kann der Reaktor 3 hierdurch gezielt in einen Betriebspunkt gebracht werden, in dem eine Nutzung der von der Heizeinrichtung 8 erzeugten Wärme mit maximalem Wirkungsgrad erfolgt.

Auch kann durch die Steuer- und/oder Regelungseinrichtung 12 die Verteilung des der Heizeinrichtung 8 zugeführten Wasserstoffs auf die einzelnen Teilheizeinrichtungen 8a, 8b, 8c, 8d in Abhängigkeit von einer von der mindestens einen Brennstoffzelle 4 zu erzeugenden elektrischen Leistung gesteuert und/oder geregelt werden und hierdurch die Heizeinrichtung 8 beispielsweise gezielt in einen Betriebspunkt gebracht werden, in dem eine Nutzung der von der Heizeinrichtung 8 erzeugten Wärme in dem Reaktor 3 mit maximalem Wirkungsgrad erfolgt.

Sowohl die Verteilung des der Heizeinrichtung 8 zugeführten Wasserstoffs H2 auf die einzelnen Teilheizeinrichtungen 8a, 8b, 8c, 8d als auch die Verteilung des dem Reaktor 3 zugeführten hydrierten flüssigen organischen Wasserstoffträgers auf die einzelnen Teilreaktoren 3a, 3b, 3c, 3d können durch die Steuer- und/oder Regelungseinrichtung 12 auch derart gesteuert und/oder geregelt werden, dass der Reaktor 3 in einem Betriebspunkt betrieben wird, in dem der Verbrauch an hydriertem flüssigen organischen Wasserstoffträger minimiert ist.

Je nach geforderter elektrischer Brennstoffzellenleistung bzw. dann erzeugter Wasserstoffmenge können dann über die Ventile 21 zum einen der Zufluss an hydriertem flüssigen organischen Wasserstoffträger auf die einzelnen Teilreaktoren 3a, 3b, 3c, 3d und die Verteilung des verfügbaren Wasserstoffs auf die einzelnen Teilheizungseinrichtungen 8a, 8b, 8c, 8d und somit Teilreaktoren 3a, 3b, 3c, 3d gesteuert und/oder geregelt werden. D.h. bei einer geringeren geforderten Brennstoffzellenleistung oder beim Hochfahren der Energieerzeugungsvorrichtung 1 werden eine geringere Anzahl von Teilreaktoren 3a, 3b, 3c, 3d mit hydriertem flüssigen organischen Wasserstoffträger und eine geringere Anzahl von Teilheizungseinrichtungen 8a, 8b, 8c, 8d mit Wasserstoff versorgt, bzw. jeweils eine höhere Anzahl bei einer höheren geforderten Brennstoffzellenleistung. Bei Nennlast der Brennstoffzelle 4 sind dann alle Teilreaktoren 3a, 3b, 3c, 3d und alle Teilheizeinrichtungen 8a, 8b, 8c, 8d im Betrieb und werden entsprechend mit hydriertem flüssigen organischen Wasserstoffträger bzw. Wasserstoff versorgt.

FIG 3 zeigt eine Verwendung der Energieerzeugungsvorrichtungen 1 von FIG 1 bzw. 20 von FIG 2 in einem Unterwasserfahrzeug 30 wie z.B. einem Unterseeboot. Die mindestens eine Brennstoffzelle 4 (Figur 1, 2) der Energieerzeugungseinrichtung 1 bzw. 20 erzeugt einen elektrischen Strom I, der (ggf. über nicht näher dargestellte Umrichter) einen elektrischen Antriebsmotor 31 speist, der über eine Propellerwelle 32 einen Propeller 33 antreibt. Außerdem kann von der Brennstoffzelle 4 erzeugter elektrischer Strom natürlich auch zur Versorgung anderer elektrischer Verbraucher an Bord des Unterwasserfahrzeug 30 genutzt werden und hierzu beispielsweise in ein Bordnetz eingespeist werden oder um Batterien zu laden bzw. auf Ladezustand zu halten.

Der hydrierte flüssige organische Wasserstoffträger kann beispielsweise von extern (z.B. im Hafen) in den Speicher 2 (Figur 1, 2) getankt werden. Es ist aber auch möglich, dass der flüssige organische Wasserstoffträger an Bord des Unterwasserfahrzeuges mit Hilfe eines Hydrierreaktors hydriert wird. Der hierfür benötigte Wasserstoff kann beispielsweise durch einen Elektrolyseur erzeugt werden, der mit Strom eines Generators betrieben wird, der z.B. bei einer Überwasserfahrt des Unterwasserfahrzeuges durch eine Verbrennungskraftmaschine angetrieben wird. Alternativ und/oder ergänzend kann auch Strom aus Solarzellen genutzt werden, die an der Außenhülle des Unterwasserfahrzeuges angeordnet oder anordenbar sind und in aufgetauchtem Zustand des Unterwasserfahrzeuges betrieben werden können.

Bevorzugt ist dabei der Wasserstoffträger ausgewählt aus einer Gruppe enthaltend polyzyklische aromatische Kohlenwasserstoffe, polyzyklische heteroaromatische Kohlenwasserstoffe, n-konjugierte organische Polymere oder einer Kombination davon.

In einer besonders bevorzugten Ausführungsform wird N-Ethylcarbazol, N-n-Propylcarbazol oder N-iso-propylcarbazol verwendet.

Weiterhin kann der Wasserstoffträger ein mit mindestens zwei Benzylresten substituiertes Toluol, wie z.B. Dibenzyltoluol, sein. Die Benzylreste können substituiert oder unsubstituiert vorliegen (die oben genannten Gruppen können als Substituent auftreten). Ebenfalls kann die Anordnung der Benzylreste am Toluolring beliebig variieren. Besonders bevorzugt ist die Verwendung von Dibenzyltoluol (auch unter dem Handelsnamen Marlotherm SH bekannt).

## Patentansprüche

1. Verfahren zur Energieerzeugung, insbesondere für mobile Anwendungen, bei dem
- in einem chemischen Reaktor (3) Wasserstoff (H2) durch zumindest teilweise Dehydrierung eines hydrierten flüssigen organischen Wasserstoffträgers (LOHC) erzeugt wird,
- in mindestens einer Brennstoffzelle (4) elektrischer Strom (I) und Wasser (H2O) aus durch den Reaktor (3) erzeugtem Wasserstoff (H2) und aus Sauerstoff (O2) erzeugt wird,
- in einer Heizeinrichtung (8) aus durch den Reaktor (3) erzeugtem Wasserstoff (H2) Wärme für den chemischen Reaktor (3) erzeugt wird,
- der von dem chemischen Reaktor (3) erzeugte Wasserstoff (H2) zuerst durch die mindestens eine Brennstoffzelle (4) geführt und anschließend der Heizeinrichtung (8) zugeführt wird,
**dadurch gekennzeichnet, dass**
- ein der mindestens einen Brennstoffzelle (4) zugeführter Volumenstrom an von dem Reaktor (3) erzeugten Wasserstoff (H2), oder
- zur Steuerung und/oder Regelung der Zufuhr an von dem Reaktor (3) erzeugten Wasserstoff (H2) zu der mindestens einen Brennstoffzelle (4) ein Druck des Wasserstoffs (H2) nach der Führung durch die mindestens eine Brennstoffzelle (4) oder eine Temperatur der mindestens einen Brennstoffzelle (4)
in Abhängigkeit von einer von der mindestens einen Brennstoffzelle (4) zu erzeugenden elektrischen Leistung und einem für die Heizeinrichtung (8) benötigten Volumenstrom an von dem Reaktor (3) erzeugten Wasserstoff gesteuert und/oder geregelt wird.

2. Verfahren nach Anspruch 1,
**dadurch gekennzeichnet, dass** die Steuerung und/oder Regelung in Abhängigkeit von der Temperatur der Heizeinrichtung (8) anstatt in Abhängigkeit von dem auf den für die Heizeinrichtung (8) benötigten Volumenstrom an Wasserstoff erfolgt.

3. Verfahren nach Anspruch 1 oder 2,
**dadurch gekennzeichnet, dass** der Reaktor (3) mehrere unabhängig voneinander betreibbaren Teilreaktoren (3a,3b,3c,3d) umfasst, wobei eine Verteilung des dem Reaktor (3) zugeführten hydrierten flüssigen organischen Wasserstoffträgers (LOHC) auf die einzelnen Teilreaktoren (3a,3b,3c,3d) in Abhängigkeit von einer von der mindestens einen Brennstoffzelle (4) zu erzeugenden elektrischen Leistung gesteuert und/oder geregelt wird.

4. Verfahren nach Anspruch 3, **dadurch gekennzeichnet, dass** die Heizeinrichtung (8) mehrere unabhängig voneinander betreibbare Teilheizeinrichtungen (8a,8b,8c,8d) umfasst, wobei jede der Teilheizeinrichtungen (8a,8b,8c,8d) jeweils genau einem der Teilreaktoren (3a,3b,3c,3d) zugeordnet ist, und wobei eine Verteilung des der Heizeinrichtung (8) zugeführten Wasserstoffs (H2) auf die einzelnen Teilheizeinrichtungen (8a,8b,8c,8d) in Abhängigkeit von einer von der mindestens einen Brennstoffzelle (4) zu erzeugenden elektrischen Leistung gesteuert und/oder geregelt wird.

5. Verfahren nach Anspruch 4, **dadurch gekennzeichnet, dass** die Verteilung des der Heizeinrichtung (8) zugeführten Wasserstoffs (H2) auf die einzelnen Teilheizeinrichtungen (8a,8b,8c,8d) und die Verteilung des dem Reaktor zugeführten hydrierten flüssigen organischen Wasserstoffträgers (LOHC) auf die einzelnen Teilreaktoren (3a,3b,3c,3d) derart gesteuert und/oder geregelt wird, dass der Reaktor (3) in einem Betriebspunkt betrieben wird, in dem der Verbrauch an hydriertem flüssigen organischen Wasserstoffträger (LOHC) minimiert ist.

6. Verfahren nach einem der vorhergehenden Ansprüche, **dadurch gekennzeichnet, dass** der erzeugte Wasserstoff (H2) vor einer Zufuhr zu der mindestens einen Brennstoffzelle (4) durch eine Gasreinigungsvorrichtung (11) geleitet wird, in der von dem erzeugten Wasserstoff (H2) mitgerissener flüssiger organischer Wasserstoffträger (LOHC) entfernt wird.

7. Energieerzeugungsvorrichtung (1, 20), insbesondere für mobile Anwendungen, umfassend
- einen chemischen Reaktor (3) zur Erzeugung von Wasserstoff (H2) durch zumindest teilweise Dehydrierung eines hydrierten flüssigen organischen Wasserstoffträgers (LOHC),
- mindestens eine mit dem chemischen Reaktor (3) in Verbindung stehende Brennstoffzelle (4) zur Erzeugung von elektrischem Strom (I) und Wasser (H2O) aus durch den Reaktor (3) erzeugtem Wasserstoff (H2) und aus Sauerstoff (O2),
- eine mit dem chemischen Reaktor (3) in thermischer Verbindung stehende Heizeinrichtung (8) zur Erzeugung von Wärme für den chemischen Reaktor (3) aus durch den Reaktor (3) erzeugtem Wasserstoff (H2), wobei
- der Reaktor (3), die Brennstoffzelle (4) und die Heizeinrichtung (8) hinsichtlich des Wasserstoffstroms in Reihe geschaltet sind derart, dass der von dem chemischen Reaktor (3) erzeugte Wasserstoff (H2) zuerst durch die mindestens eine Brennstoffzelle (4) geführt und anschließend der Heizeinrichtung (8) zugeführt wird,
**gekennzeichnet durch** eine Steuer- und/oder Regelungseinrichtung (12), die ausgebildet ist
- zur Steuerung und/oder Regelung eines der mindestens einen Brennstoffzelle (4) zugeführten Volumenstromes an von dem Reaktor (3) erzeugten Wasserstoff (H2), oder
- zur Steuerung und/oder Regelung einer Zufuhr an von dem Reaktor (3) erzeugten Wasserstoff (H2) zu der mindestens einen Brennstoffzelle (4) durch Steuerung und/oder Regelung eines Drucks des Wasserstoffs (H2) nach der Führung durch die mindestens eine Brennstoffzelle (4) oder durch Steuerung und/oder Regelung einer Temperatur der mindestens einen Brennstoffzelle (4)
in Abhängigkeit von einer von der mindestens einen Brennstoffzelle (4) zu erzeugenden elektrischen Leistung und einem für die Heizeinrichtung (8) benötigten Volumenstrom an von dem Reaktor (3) erzeugten Wasserstoff (H2).

8. Energieerzeugungsvorrichtung (1, 20) nach Anspruch 7, **dadurch gekennzeichnet, dass** die Steuerung und/oder Regelung in Abhängigkeit von der Temperatur der Heizeinrichtung (8) anstatt in Abhängigkeit von dem auf den für die Heizeinrichtung (8) benötigten Volumenstrom an Wasserstoff erfolgt.

9. Energieerzeugungsvorrichtung (1, 20) nach einem der Ansprüche 7 bis 8, **dadurch gekennzeichnet, dass** der Reaktor (3) mehrere unabhängig voneinander betreibbare Teilreaktoren (3a,3b,3c,3d) umfasst und dass die Steuer- und/oder Regelungseinrichtung (12) ausgebildet ist, eine Verteilung des dem Reaktor (3) zugeführten hydrierten flüssigen organischen Wasserstoffträgers (LOHC) auf die einzelnen Teilreaktoren (3a,3b,3c,3d) in Abhängigkeit von einer von der mindestens einen Brennstoffzelle (4) zu erzeugenden elektrischen Leistung zu steuern und/oder zu regeln.

10. Energieerzeugungsvorrichtung (1, 20) nach Anspruch 9, **dadurch gekennzeichnet, dass** die Heizeinrichtung (8) mehrere unabhängig voneinander betreibbare Teilheizeinrichtungen (8a,8b,8c,8d) umfasst, wobei jede der Teilheizeinrichtungen (8a,8b,8c,8d) jeweils genau einem der Teilreaktoren (3a,3b,3c,3d) zugeordnet ist, und wobei die Steuer- und/oder Regelungseinrichtung (12) ausgebildet ist, die Verteilung des der Heizeinrichtung (8) zugeführten Wasserstoffs auf die einzelnen Teilheizeinrichtungen (8a,8b,8c,8d) in Abhängigkeit von einer von der mindestens einen Brennstoffzelle (4) zu erzeugenden elektrischen Leistung zu steuer und/oder zu regeln.

11. Energieerzeugungsvorrichtung (1, 20) nach Anspruch 10, **dadurch gekennzeichnet, dass** die Steuer- und/oder Regelungseinrichtung (12) ausgebildet ist, die Verteilung des der Heizeinrichtung (8) zugeführten Wasserstoffs auf die einzelnen Teilheizeinrichtungen (8a,8b,8c,8d) und die Verteilung des dem Reaktor (3) zugeführten hydrierten flüssigen organischen Wasserstoffträgers auf die einzelnen Teilreaktoren derart zu steuern und/oder zu regeln, dass der Reaktor (3) in einem Betriebspunkt betrieben wird, in dem der Verbrauch an hydriertem flüssigen organischen Wasserstoffträger (LOHC) minimiert ist.

12. Energieerzeugungsvorrichtung (1, 20) nach einem der Ansprüche 7 bis 11, **gekennzeichnet durch** eine in der Verbindung (9) zwischen dem chemischen Reaktor (3) und der mindestens einen Brennstoffzelle (4) angeordnete Gasreinigungsvorrichtung (11) zur Entfernung von flüssigem organischem Wasserstoffträger.

13. Wasserfahrzeug (30), insbesondere Unterwasserfahrzeug, mit einer Energieerzeugungsvorrichtung (1, 20) nach einem der Ansprüche 7 bis 12.

14. Wasserfahrzeug (30) nach Anspruch 13, mit einem Speicher (2) für den hydrierten flüssigen organischen Wasserstoffträger (LOHC) und mit einem von dem elektrischen Strom der mindestens einen Brennstoffzelle (4) gespeisten elektrischen Antriebsmotor (31) für den Antrieb des Wasserfahrzeuges (30).

## Claims

1. Method for generating energy, in particular for mobile applications, wherein
- hydrogen (H2) is produced by at least partial dehydrogenation of a hydrogenated liquid organic hydrogen carrier (LOHC) in a chemical reactor (3),
- electricity (I) and water (H2O) are generated in at least one fuel cell (4) from hydrogen (H2) produced by the reactor (3) and from oxygen (O2),
- heat for the chemical reactor (3) is generated in a heating device (8) from hydrogen (H2) produced by the reactor (3),
- the hydrogen (H2) produced by the chemical reactor (3) is first conducted through the at least one fuel cell (4) and then supplied to the heating device (8),
**characterised in that**
- a volumetric flow of hydrogen (H2) produced by the reactor (3) that is supplied to the at least one fuel cell (4), or
- in order to control and/or regulate the supply of hydrogen (H2) produced by the reactor (3) to the at least one fuel cell (4), a pressure of the hydrogen (H2) after the latter has been conducted through the at least one fuel cell (4) or a temperature of the at least one fuel cell (4)
is controlled and/or regulated as a function of an electrical power output to be generated by the at least one fuel cell (4) and a volumetric flow of hydrogen produced by the reactor (3) that is required for the heating device (8).

2. Method according to claim 1,
**characterised in that** the control and/or regulation takes place as a function of the temperature of the heating device (8) instead of as a function of the volumetric flow of hydrogen that is required for the heating device (8).

3. Method according to claim 1 or 2,
**characterised in that** the reactor (3) comprises a plurality of subreactors (3a,3b,3c,3d) that can be operated independently of one another, wherein a distribution of the hydrogenated liquid organic hydrogen carrier (LOHC) supplied to the reactor (3) to the individual subreactors (3a,3b,3c,3d) is controlled and/or regulated as a function of an electrical power output to be generated by the at least one fuel cell (4).

4. Method according to claim 3, **characterised in that** the heating device (8) comprises a plurality of heating subdevices (8a,8b,8c,8d) that can be operated independently of one another, wherein each of the heating subdevices (8a,8b,8c,8d) is associated in each case with precisely one of the subreactors (3a,3b,3c,3d), and wherein a distribution of the hydrogen (H2) supplied to the heating device (8) to the individual heating subdevices (8a,8b,8c,8d) is controlled and/or regulated as a function of an electrical power output to be generated by the at least one fuel cell (4).

5. Method according to claim 4, **characterised in that** the distribution of the hydrogen (H2) supplied to the heating device (8) to the individual heating subdevices (8a,8b,8c,8d) and the distribution of the hydrogenated liquid organic hydrogen carrier (LOHC) supplied to the reactor to the individual subreactors (3a,3b,3c,3d) is controlled and/or regulated in such a way that the reactor (3) is operated in an operating point in which the consumption of hydrogenated liquid organic hydrogen carrier (LOHC) is minimised.

6. Method according to one of the preceding claims, **characterised in that**, before being supplied to the at least one fuel cell (4), the hydrogen (H2) produced is conducted through a gas cleaning device (11) in which liquid organic hydrogen carrier (LOHC) entrained by the produced hydrogen (H2) is removed.

7. Energy generation device (1, 20), in particular for mobile applications, comprising
- a chemical reactor (3) for producing hydrogen (H2) by at least partial dehydrogenation of a hydrogenated liquid organic hydrogen carrier (LOHC),
- at least one fuel cell (4) connected to the chemical reactor (3) for generating electricity (I) and water (H2O) from hydrogen (H2) produced by the reactor (3) and from oxygen (O2),
- a heating device (8) thermally coupled to the chemical reactor (3) for generating heat for the chemical reactor (3) from hydrogen (H2) produced by the reactor (3), wherein
- the reactor (3), the fuel cell (4) and the heating device (8) are connected in series with respect to the hydrogen flow in such a way that the hydrogen (H2) produced by the chemical reactor (3) is first conducted through the at least one fuel cell (4) and then supplied to the heating device (8),
**characterised by** a control and/or regulating device (12) which is embodied
- to control and/or regulate a volumetric flow of hydrogen (H2) produced by the reactor (3) that is supplied to the at least one fuel cell (4), or
- to control and/or regulate a supply of hydrogen (H2) produced by the reactor (3) to the at least one fuel cell (4) by controlling and/or regulating a pressure of the hydrogen (H2) after the latter has been conducted through the at least one fuel cell (4) or by controlling and/or regulating a temperature of the at least one fuel cell (4)
as a function of an electrical power output to be generated by the at least one fuel cell (4) and a volumetric flow of hydrogen (H2) produced by the reactor (3) that is required for the heating device (8).

8. Energy generation device (1, 20) according to claim 7, **characterised in that** the control and/or regulation takes place as a function of the temperature of the heating device (8) instead of as a function of the volumetric flow of hydrogen that is required for the heating device (8).

9. Energy generation device (1, 20) according to one of claims 7 to 8, **characterised in that** the reactor (3) comprises a plurality of subreactors (3a,3b,3c,3d) that can be operated independently of one another and **in that** the control and/or regulating device (12) is embodied to control and/or regulate a distribution of the hydrogenated liquid organic hydrogen carrier (LOHC) supplied to the reactor (3) to the individual subreactors (3a,3b,3c,3d) as a function of an electrical power output to be generated by the at least one fuel cell (4).

10. Energy generation device (1, 20) according to claim 9, **characterised in that** the heating device (8) comprises a plurality of heating subdevices (8a,8b,8c,8d) that can be operated independently of one another, wherein each of the heating subdevices (8a,8b,8c,8d) is associated in each case with precisely one of the subreactors (3a,3b,3c,3d), and wherein the control and/or regulating device (12) is embodied to control and/or regulate the distribution of the hydrogen supplied to the heating device (8) to the individual heating subdevices (8a,8b,8c,8d) as a function of an electrical power output to be generated by the at least one fuel cell (4).

11. Energy generation device (1, 20) according to claim 10, **characterised in that** the control and/or regulating device (12) is embodied to control and/or regulate the distribution of the hydrogen supplied to the heating device (8) to the individual heating subdevices (8a,8b,8c,8d) and the distribution of the hydrogenated liquid organic hydrogen carrier supplied to the reactor (3) to the individual subreactors in such a way that the reactor (3) is operated in an operating point in which the consumption of hydrogenated liquid organic hydrogen carrier (LOHC) is minimised.

12. Energy generation device (1, 20) according to one of claims 7 to 11, **characterised by** a gas cleaning device (11) arranged in the connection (9) between the chemical reactor (3) and the at least one fuel cell (4) for the purpose of removing liquid organic hydrogen carrier.

13. Water vehicle (30), in particular an underwater vehicle, having an energy generation device (1, 20) according to one of claims 7 to 12.

14. Water vehicle (30) according to claim 13, having a storage means (2) for the hydrogenated liquid organic hydrogen carrier (LOHC) and having an electric propulsion motor (31) fed by the electricity generated by the at least one fuel cell (4) for the purpose of driving the water vehicle (30).

## Revendications

1. Procédé de production d'énergie, notamment pour des applications mobiles, dans lequel
- on produit, dans un réacteur (3) chimique, de l'hydrogène (H2) par déshydrogénation au moins partielle d'un porteur d'hydrogène (LOHC) organique liquide hydrogéné,
- on produit, dans au moins une pile (4) à combustible, du courant (I) électrique et de l'eau (H2O) à partir d'hydrogène (H2) produit par le réacteur (3) et d'oxygène (O2),
- on produit, dans un dispositif (8) de chauffage, à partir de l'hydrogène (H2) produit par le réacteur (3), de la chaleur pour le réacteur (3) chimique,
- on fait passer l'hydrogène (H2) produit par le réacteur (3) chimique, d'abord dans la au moins une pile (4) à combustible et on l'envoie ensuite au dispositif (8) de chauffage,
**caractérisé en ce que**
- un courant en volume d'hydrogène (H2) produit par le réacteur (3) est envoyé à la au moins une pile (4) à combustible, ou
- pour commander et/ou réguler l'envoi d'hydrogène (H2) produit par le réacteur (3) à la au moins une pile (4) à combustible, on commande et/ou on régule une pression de l'hydrogène (H2) après le passage dans la au moins une pile (4) à combustible ou une température de la au moins une pile (4) à combustible en fonction d'une puissance électrique à produire par la au moins une pile (4) à combustible et d'un courant en volume, nécessaire pour le dispositif (8) de chauffage, d'hydrogène produit par le réacteur (3).

2. Procédé suivant la revendication 1,
**caractérisé en ce que** la commande et/ou la régulation s'effectue en fonction de la température du dispositif (8) de chauffage au lieu d'en fonction du courant en volume d'hydrogène nécessaire au dispositif (8) de chauffage.

3. Procédé suivant la revendication 1 ou 2,
**caractérisé en ce que** le réacteur (3) comprend plusieurs réacteurs (3a, 3b, 3c, 3d) partiels pouvant fonctionner indépendamment les uns des autres, une répartition du porteur d'hydrogène (LOHC) organique liquide hydrogéné envoyé au réacteur (3) entre les divers réacteurs (3a, 3b, 3c, 3d) partiels étant commandée et/ou régulée en fonction d'une puissance électrique à produire par la au moins une pile (4) à combustible.

4. Procédé suivant la revendication 3, **caractérisé en ce que** le dispositif (8) de chauffage comprend plusieurs dispositifs (8a, 8b, 8c, 8d) partiels de chauffage pouvant fonctionner indépendamment les uns des autres, chacun des dispositifs (8a, 8b, 8c, 8d) partiels de chauffage étant associé, respectivement, exactement à l'un des réacteurs (3a, 3b, 3c, 3d) partiels et une répartition de l'hydrogène (H2) envoyé au dispositif (8) de chauffage entre les divers dispositifs (8a, 8b, 8c, 8d) partiels de chauffage étant commandée et/ou régulée en fonction d'une puissance électrique à produire par la au moins une pile (4) à combustible.

5. Procédé suivant la revendication 4, **caractérisé en ce que** l'on commande et/ou on régule la répartition de l'hydrogène (H2) envoyé au dispositif (8) de chauffage entre les divers dispositifs (8a, 8b, 8c, 8d) partiels de chauffage et la répartition du porteur d'hydrogène (LOHC) organique liquide hydrogéné envoyé au réacteur entre les divers réacteurs (3a, 3b, 3c, 3d) partiels de manière à faire fonctionner le réacteur (3) à un point de fonctionnement où la consommation de organique liquide hydrogéné porteur d'hydrogène (LOHC) organique liquide hydrogéné est minimisée.

6. Procédé suivant l'une des revendications précédentes, **caractérisé en ce que** l'on fait passer l'hydrogène (H2) produit, avant de l'envoyer à la au moins une pile (4) à combustible, dans une installation (11) d'épuration des gaz, dans laquelle du, porteur d'hydrogène (LOHC) liquide organique, entraîné par l'hydrogène (H2) produit, est éliminé.

7. Installation (1, 20) de production d'énergie, notamment pour des applications mobiles, comprenant
- un réacteur (3) chimique de production d'hydrogène (H2) par déshydrogénation au moins partielle d'un porteur d'hydrogène (LOHC) organique liquide hydrogéné,
- au moins une pile (4) à combustible en liaison avec le réacteur (3) chimique pour produire du courant (I) électrique et de l'eau (H2O) à partir de l'hydrogène (H2) produit par le réacteur (3) et d'oxygène (O2),
- un dispositif (8) de chauffage en liaison thermique avec le réacteur (3) chimique pour produire de la chaleur pour le réacteur (3) chimique à partir d'hydrogène (H2) produit par le réacteur (3), dans laquelle
- le réacteur (3), la pile (4) à combustible et le dispositif (8) de chauffage sont, du point de vue du courant d'hydrogène, montés en série, de manière à faire passer l'hydrogène (H2) produit par le réacteur (3) chimique, d'abord dans la au moins une pile (4) à combustible et à l'envoyer ensuite au dispositif (8) de chauffage,
**caractérisé par** un dispositif (12) de commande et/ou de régulation constitué
- pour commander et/ou réguler un courant en volume, envoyé à la au moins une pile (4) à combustible, d'hydrogène (H2) produit par le réacteur (3), ou
- pour commander et/ou réguler un envoi d'hydrogène (H2) produit par le réacteur (3) à la au moins une pile (4) à combustible, en commandant et/ou en régulant une pression de l'hydrogène (H2) après le passage dans la au moins une pile (4) à combustible ou en commandant et/ou en régulant une température de la au moins une pile (4) à combustible en fonction d'une puissance électrique à produire par la au moins une pile (4) à combustible et d'un courant en volume, nécessaire au dispositif (8) de chauffage, d'hydrogène (H2) produit par le réacteur (3).

8. Installation (1, 20) de production d'énergie suivant la revendication 7,
**caractérisée en ce que** la commande et/ou la régulation s'effectue en fonction de la température du dispositif (8) de chauffage au lieu d'en fonction du courant en volume d'hydrogène nécessaire au dispositif (8) de chauffage.

9. Installation (1, 20) de production d'énergie suivant l'une des revendications 7 à 8, **caractérisée en ce que** le réacteur (3) a plusieurs réacteurs (3a, 3b, 3c, 3d) partiels pouvant fonctionner indépendamment les uns des autres et **en ce que** le dispositif (12) de commande et/ou de régulation est constitué pour commander et/ou réguler une répartition du porteur d'hydrogène (LOHC) organique liquide hydrogéné envoyé au réacteur (3), entre les divers réacteurs (3a, 3b, 3c, 3d) partiels en fonction d'une puissance électrique à produire par la au moins une pile (4) à combustible.

10. Installation (1, 20) de production d'énergie suivant la revendication 9,
**caractérisée en ce que** le dispositif (8) de chauffage a plusieurs dispositifs (8a, 8b, 8c, 8d) partiels de chauffage pouvant fonctionner indépendamment les uns des autres, chacun des dispositifs (8a, 8b, 8c, 8d) partiels de chauffage étant associé, respectivement, exactement à l'un des réacteurs (3a, 3b, 3c, 3d) partiels, et dans laquelle le dispositif (12) de commande et/ou de régulation est constitué pour commander et/ou réguler la répartition de l'hydrogène envoyé au dispositif (8) de chauffage entre les divers dispositifs (8a, 8b, 8c, 8d) partiels de chauffage en fonction d'une puissance électrique à produire par la au moins une pile (4) à combustible.

11. Installation (1, 20) de production d'énergie suivant la revendication 10,
**caractérisée en ce que** le dispositif (12) de commande et/ou de régulation est constitué pour commander et/ou réguler la répartition de l'hydrogène envoyé au dispositif (8) de chauffage entre les divers dispositifs (8a, 8b, 8c, 8d) partiels de chauffage et la répartition du porteur d'hydrogène organique liquide hydrogéné envoyé au réacteur (3) entre les divers réacteurs partiels, de manière à faire fonctionner le réacteur (3) à un point de fonctionnement où la consommation de porteur d'hydrogène (LOHC) organique liquide hydrogéné est minimisée.

12. Installation (1, 20) de production d'énergie suivant l'une des revendications 7 à 11, **caractérisée par** une installation (11) d'épuration des gaz disposée dans la liaison (9) entre le réacteur (3) chimique et la au moins une pile (4) à combustible, pour éliminer du porteur d'hydrogène liquide organique.

13. Véhicule (30) marin, notamment sous-marin, comprenant une installation (1, 20) de production d'énergie suivant l'une des revendications 7 à 12.

14. Véhicule (30) marin suivant la revendication 13, comprenant un réservoir (2) pour le porteur d'hydrogène (LOHC) organique liquide hydrogéné et un moteur (31) électrique de propulsion du véhicule (30) marin alimenté par le courant électrique de la au moins une pile (4) à combustible.
